# FASCICULE DE BREVET EUROPEEN

(11) **EP 3 360 723 B1**
(45) Date de publication et mention de la délivrance du brevet: **01.04.2020**
(21) Numéro de dépôt: 18156480.8
(22) Date de dépôt: 13.02.2018
(51) Int. Cl.: B60L 3/00, B60L 1/08, B60L 1/00, B60L 1/02, B60L 15/20

(54) **PROCÉDÉ DE GESTION D'ÉNERGIE ÉLECTRIQUE DANS UN VÉHICULE FERROVIAIRE, SYSTÈME DE GESTION D'ÉNERGIE CORRESPONDANT ET VÉHICULE FERROVIAIRE CORRESPONDANT**
VERFAHREN ZUR STEUERUNG DER ELEKTRISCHEN ENERGIE IN EINEM SCHIENENFAHRZEUG, ENTSPRECHENDES ENERGIESTEUERUNGSSYSTEM UND ENTSPRECHENDES SCHIENENFAHRZEUG
A METHOD FOR MANAGING ELECTRICAL ENERGY IN A RAILWAY VEHICLE, CORRESPONDING POWER MANAGEMENT SYSTEM, AND CORRESPONDING RAILWAY VEHICLE

(30) Priorité: 14.02.2017 FR 1751191
(43) Date de publication de la demande: 15.08.2018
(73) Titulaire: ALSTOM Transport Technologies, 93400 Saint-Ouen (FR)
(72) Inventeur: VIENNE, Mathieu, 17000 LA ROCHELLE (FR)
(74) Mandataire: Lavoix

(56) Documents cités:
- EP-A1- 1 129 892
- EP-A1- 1 864 846
- EP-A1- 2 340 957
- EP-A1- 2 994 332

## Description

L'invention concerne un procédé de gestion de la fourniture d'énergie électrique à plusieurs équipements consommateurs d'énergie dans un véhicule ferroviaire à partir d'un stockage d'énergie embarqué.

L'invention concerne également un système de gestion d'énergie destiné à gérer la fourniture d'énergie électrique à ces équipements.

L'invention concerne enfin un véhicule ferroviaire adapté pour interagir avec un tel système de gestion.

La question de la fourniture d'énergie électrique à ces équipements se pose notamment lorsque le véhicule ferroviaire traverse une zone géographique dépourvue d'un réseau électrique d'alimentation et que l'énergie électrique est susceptible de manquer.

Pour gérer cette situation, il est connu de pratiquer un délestage du convertisseur statique du véhicule ferroviaire. Le convertisseur statique produit, à partir de l'énergie contenue dans le stockage embarqué, de l'électricité, par exemple triphasée à 50 Hz, destinée à alimenter un équipement considéré comme facultatif pour la marche du véhicule ferroviaire. Ces équipements facultatifs comprennent notamment des systèmes dits HVAC, de chauffage, de ventilation et/ou d'air conditionné, réservés aux passagers du véhicule ferroviaire ou à une cabine de pilotage.

Toutefois, bien que facultatifs pour la marche du véhicule ferroviaire, ces équipements contribuent au bien être des passagers et du conducteur, de sorte que la logique de délestage précitée est susceptible de réduire ce bien être, voire de causer un désagrément.

Un but de l'invention est donc d'éliminer ou au moins de réduire ce désagrément.

A cet effet, l'invention a pour objet un procédé selon la revendication 1.

Selon des modes de réalisation particuliers, le procédé comprend l'une ou plusieurs des caractéristiques suivantes, prise(s) seule ou selon toutes les combinaisons techniquement possibles :
- la détermination de l'état de fonctionnement souhaité des équipements consommateurs utilise au moins un paramètre représentatif d'un état de fonctionnement du véhicule ferroviaire, par exemple pris parmi tout ou partie des états suivants : « nominal », « dégradé », « secourant un autre véhicule ferroviaire », « à l'arrêt », « roulant », et « avec un ou plusieurs arrêts prévus pendant la traversée de la zone géographique dépourvue de réseau électrique » ;
- la sélection comprend un calcul d'un nombre de démarrages pendant une période écoulée de chaque compresseur non mis à l'écart par la première mise à l'écart, et une deuxième mise à l'écart des compresseurs possédant les nombres de démarrages les plus élevés ;
- ladite sélection des équipements HVAC comprend, pour les équipements HVAC ayant la somme ou le minimum des durées résiduelles de cycle les plus bas, un calcul d'un nombre de démarrages de chaque compresseur dans une période écoulée, et un calcul d'une somme ou d'un minimum des nombres de démarrages, les équipements HVAC sélectionnés ayant la somme ou le minimum des nombres de démarrages les plus bas ;
- au moins deux des équipements consommateurs sont des équipements HVAC desservant respectivement une cabine de pilotage du véhicule ferroviaire, l'une des cabine de pilotage étant en service et l'autre hors service, la détermination de l'état de fonctionnement souhaité pour ces équipements consommateurs comprenant une sélection de ceux destinés à être arrêtés, les équipements consommateurs destinés à être arrêtés étant : aucun si le paramètre d'énergie est supérieur à un premier seuil prédéterminé ; l'un des deux équipements consommateurs si le paramètre d'énergie est inférieur au premier seuil et supérieur à un deuxième seuil prédéterminé, l'équipement consommateur à maintenir en fonctionnement se situant de préférence dans la cabine de pilotage en service ; et les deux équipements consommateurs si le paramètre d'énergie est inférieur au deuxième seuil ;
- les équipements consommateurs comprennent : un équipement consommateur alimenté en courant triphasé, la détermination de l'état de fonctionnement souhaité pour cet équipement consommateur comportant une comparaison du paramètre d'énergie à un troisième seuil prédéterminé, l'état de fonctionnement souhaité étant une interruption de l'alimentation si le paramètre d'énergie est inférieur au troisième seuil ; et/ou un équipement consommateur alimenté en courant triphasé à fréquence et/ou tension ajustable(s) via un convertisseur, l'état de fonctionnement souhaité pour cet équipement consommateur comportant une alimentation à une fréquence et/ou tension inférieure(s) à une fréquence nominale d'alimentation et/ou à une tension nominale d'alimentation, la fréquence et/ou la tension étant déterminées en utilisant au moins le paramètre d'énergie ; et/ou un équipement consommateur alimenté en courant continu à partir du stockage d'énergie via le convertisseur, de préférence à une tension de 24V, la détermination de l'état de fonctionnement souhaité pour cet équipement consommateur comportant une comparaison du paramètre d'énergie à un quatrième seuil prédéterminé, l'état de fonctionnement souhaité étant une interruption de l'alimentation via le convertisseur si le paramètre d'énergie est inférieur au quatrième seuil, l'équipement consommateur étant alors de préférence alimenté par une batterie auxiliaire ; et
- l'un des équipements consommateurs est un système de traction et de freinage du véhicule ferroviaire, la détermination de l'état de fonctionnement souhaité pour cet équipement consommateur comportant : un calcul d'une puissance ou d'un courant d'alimentation réduits à consommer par cet équipement consommateur ; ou un calcul d'une consigne de vitesse maximale, la vitesse maximale étant destinée à ne pas être dépassée par le véhicule ferroviaire.

L'invention a également pour objet un système de gestion d'énergie selon la revendication 8.

L'invention a enfin pour objet un véhicule ferroviaire adapté pour interagir avec, ou comprenant, un système de gestion d'énergie tel que décrit ci-dessus.

L'invention sera mieux comprise à la lecture de la description qui va suivre, donnée uniquement à titre d'exemple et faite en se référant aux dessins annexés, sur lesquels :
- la figure 1 est une représentation schématique d'un véhicule ferroviaire selon l'invention,
- la figure 2 est une représentation schématique d'un système de gestion d'énergie selon l'invention, également représenté sur la figure 1 et
- les figures 3 et 4 sont des logigrammes représentant schématiquement un exemple de détermination d'un état de fonctionnement souhaité des équipements HVAC réservés aux passagers.

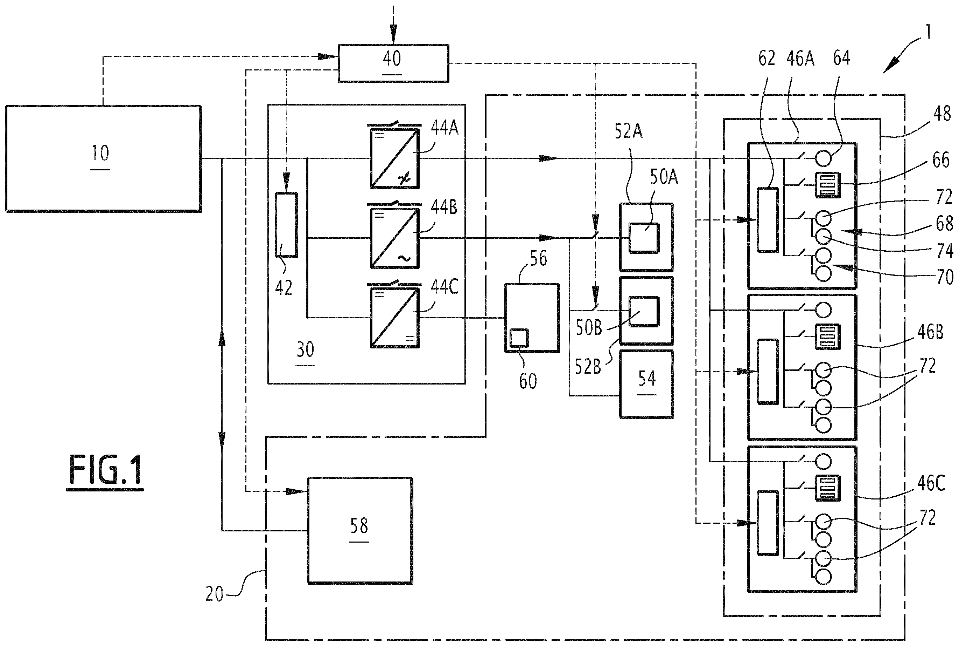

En référence à la figure 1, on décrit un véhicule ferroviaire 1 selon l'invention.

Le véhicule ferroviaire 1 comprend un stockage d'énergie 10 embarqué, des équipements consommateurs 20 recevant de l'énergie électrique du stockage d'énergie 10 notamment lorsque le véhicule ferroviaire traverse une zone géographique (non représentée) dépourvue d'un réseau électrique d'alimentation, un convertisseur statique 30 pour alimenter certains des équipements consommateurs, et un système de gestion d'énergie 40 selon l'invention.

Le convertisseur statique 30 comprend une unité de contrôle 42, et par exemple trois modules de conversion 44A, 44B et 44C.

Le module 44A est par exemple adapté pour produire une électricité triphasée, d'une tension de 400 V, et à fréquence variable.

Les fréquences produites sont par exemple de 45, 50, 55 ou 60 Hz.

Le module 44B est par exemple adapté pour produire une électricité triphasée, à 400 V, et 50 Hz.

Le module 44C est par exemple adapté pour produire un courant continu sous une tension de 24 V.

Les équipements consommateurs 20 sont éligibles au délestage afin de réduire et/ou d'optimiser la quantité d'énergie électrique prélevée au niveau du stockage d'énergie 10.

Les équipements consommateurs 20 comprennent, par exemple, trois équipements HVAC 46A, 46B, 46C situés, au moins partiellement, dans un espace 48 réservé aux passagers du véhicule ferroviaire 1, deux équipements HVAC 50A, 50B situés respectivement dans une cabine de pilotage 52A en service et dans une cabine de pilotage 52B hors service, un équipement 54 relié électriquement au module de conversion 44B, un équipement 56 relié électriquement au module 44C, et avantageusement un système 58 de traction et de freinage du véhicule ferroviaire 1.

Le système 58 de traction et de freinage est consommateur d'énergie lorsqu'il agit en traction, et avantageusement producteur d'énergie lorsqu'il agit en freinage. Le système 58 est relié électriquement directement au stockage d'énergie 10. Le système 58 est adapté pour fonctionner si nécessaire selon au moins une marche réduisant sa consommation d'énergie par rapport à une marche nominale.

L'équipement 56 comporte avantageusement une batterie auxiliaire 60 pour suppléer à la fourniture de courant continu par le module 44C. L'équipement 56 est par exemple adapté pour contrôler l'éclairage interne du véhicule ferroviaire 1.

Les équipements HVAC 50A, 50B sont connectés électriquement au module 44B.

Selon des variantes non représentées, l'espace 48 réservé aux passagers comprend seulement un ou deux équipements HVAC, ou bien plus de trois équipements HVAC.

Les équipements HVAC 46A, 46B, 46C étant analogues les uns aux autres, seul l'équipement 46A sera décrit ci-après.

L'équipement 46A comprend une unité de contrôle 62, une unité de ventilation 64 adaptée pour ventiler de l'air dans l'espace 48, une unité de chauffage 66, et deux groupes 68, 70 de climatisation de l'espace 48.

En variante (non représentée), l'équipement 46A comprend deux unités de chauffage analogues à l'unité 66.

Chacun des groupes 68, 70 comporte un compresseur 72 et un ventilateur 74.

L'équipement 46A est propre à recevoir un signal d'alimentation à fréquence et à tension variables.

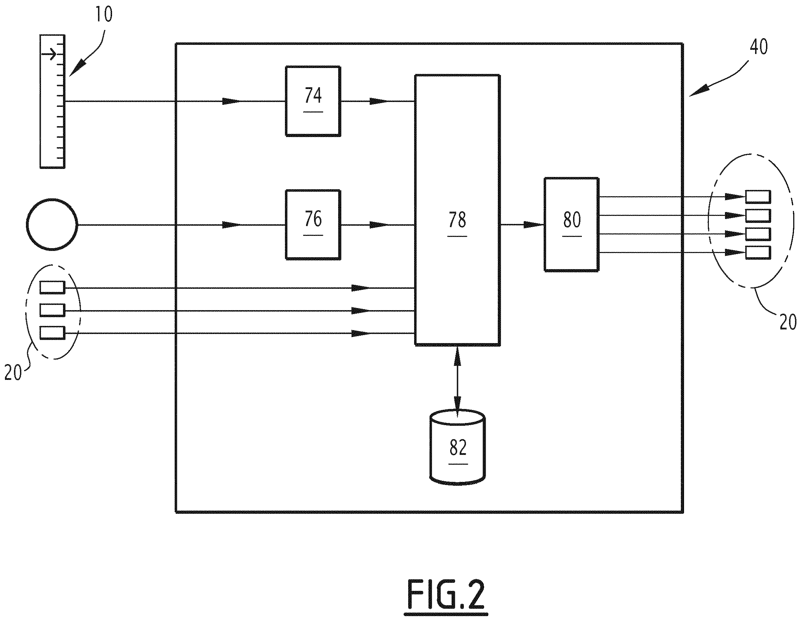

Le système de gestion d'énergie 40 va maintenant être décrit en référence à la figure 2. Il représente un exemple de système de gestion d'énergie selon l'invention.

Le système de gestion d'énergie 40 est destiné à gérer la fourniture d'énergie électrique aux équipements consommateurs 20. Le système de gestion d'énergie 40 comprend un module d'énergie 74 adapté pour fournir un paramètre d'énergie représentatif d'un niveau d'énergie disponible dans le stockage d'énergie 10, et un module de localisation 76 adapté pour fournir un paramètre de localisation représentatif d'une localisation du véhicule ferroviaire 1.

Le système de gestion d'énergie 40 est notamment destiné à gérer la fourniture d'énergie électrique au convertisseur statique 30 et au système 58 de traction et de freinage.

Le système de gestion d'énergie 40 comprend également un module de calcul 78 adapté pour déterminer un état de fonctionnement souhaité pour chacun des équipements consommateurs 20, pour le convertisseur statique 30 et pour le système 58 de traction et de freinage, et un module d'envoi 80 pour envoyer à chacun de ces équipements une consigne de fonctionnement selon l'état de fonctionnement souhaité. Le système de gestion d'énergie 40 comprend également une mémoire 82, adaptée notamment pour conserver des informations relatives au fonctionnement passé des équipements consommateurs 20, du convertisseur statique 30 et/ou du le système 58 de traction et de freinage.

Le système de gestion 40 est avantageusement embarqué à bord du véhicule ferroviaire 1, ou bien, selon une variante non représentée, est situé à distance et est adapté pour communiquer avec les équipements consommateurs 20, le convertisseur 30 et/ou le système 58 de traction et de freinage du véhicule ferroviaire.

Le système de gestion d'énergie 40 est adapté pour mettre en œuvre les étapes d'un procédé selon l'invention, décrit ci-après.

Le procédé comporte une étape d'obtention du paramètre d'énergie par le module d'énergie 74, et du paramètre de localisation par le module de localisation 76, puis une étape de détermination d'un état de fonctionnement souhaité pour chacun des équipements consommateurs 20 et avantageusement pour le convertisseur statique 30 ou les modules de conversion 44A, 44B et 44C et le système 58 de traction et de freinage sur la base du paramètre d'énergie et du paramètre de localisation. Le procédé comporte aussi un envoi à chaque équipement consommateur 20 et avantageusement au convertisseur statique 30 et au système 58 de traction et de freinage, par le module d'envoi 80, d'une consigne de fonctionnement demandant ou imposant à l'équipement correspondant de fonctionner selon l'état de fonctionnement souhaité qui a été déterminé.

Le paramètre d'énergie est par exemple un pourcentage représentatif du niveau de charge du stockage d'énergie 10. « 100% » signifie que le stockage 10 est totalement chargé, tandis que « 0 % » signifie que le stockage 10 est vide.

Le paramètre de localisation est par exemple une abscisse indiquant la position du véhicule ferroviaire 1 sur une voie ferrée (non représentée).

En variante, le module de localisation 76 est adapté pour fournir plusieurs paramètres de localisation, tels que par exemple des coordonnées géographiques.

Selon une variante non représentée, la gestion de la fourniture d'énergie électrique est réalisée sans tenir compte de la localisation du véhicule ferroviaire 1, et le système de gestion d'énergie 40 est dépourvu du module de localisation 76.

Selon un mode de réalisation particulier, la détermination de l'état de fonctionnement souhaité pour chacun des équipements consommateurs 20 utilise au moins un paramètre représentatif d'un état de fonctionnement du véhicule ferroviaire 1, par exemple pris parmi tout ou partie des états suivants : « nominal », « dégradé », « secourant un autre véhicule ferroviaire », « à l'arrêt », « roulant », et « avec un ou plusieurs arrêts prévus pendant la traversée de la zone géographique dépourvue de réseau électrique ».

La consigne de fonctionnement est individualisée pour chaque équipement consommateur 20 et/ou pour chaque module de conversion 44A, 44B et 44C et le système 58 de traction et de freinage. La consigne peut être un fonctionnement en marche dégradée ou réduite, voire une interruption pure et simple de l'alimentation électrique de l'équipement consommateur 20 et/ou du module de conversion 44A, 44B et 44C et/ou du système 58 de traction et de freinage concerné.

La détermination de l'état de fonctionnement souhaité pour le système 58 de traction et de freinage comporte par exemple un calcul d'une puissance ou d'un courant d'alimentation réduits à consommer par cet équipement consommateur.

En variante, la détermination de l'état de fonctionnement souhaité pour le système 58 de traction et de freinage comporte par exemple un calcul d'une consigne de vitesse maximale destinée à ne pas être dépassée par le véhicule ferroviaire 1.

Pour le module 44A, la consigne de fonctionnement comporte par exemple une réduction de la fréquence et/ou de la tension produite(s).

La détermination de l'état de fonctionnement souhaité est réalisée par le module de calcul 78, par exemple selon des critères résumés dans le tableau 1 ci-après.

**Tableau 1**

| **Equipements consommateurs 20** | **Fonctionnement sur réseau électrique** | **Paramètre d'énergie ≥ à niveau 1** | **Paramètre d'énergie ≥ à niveau 2** | **Paramètre d'énergie ≥ à niveau 3** | **Paramètre d'énergie ≥ à niveau 4** | **Paramètre d'énergie ≥ à niveau 5** | **Paramètre d'énergie ≥ à niveau 6** |
|---|---|---|---|---|---|---|---|
| **Equipements HVAC 46A à 46C 400 V fréquence variable** | 45 à 60 Hz six compresseurs 72 autorisés | 45 Hz six compresseurs 72 autorisés | 45 Hz cinq compresseurs 72 autorisés | 45 Hz quatre compresseurs 72 autorisés | 45 Hz trois compresseurs 72 autorisés | Interruption de la fourniture électrique | Interruption de la fourniture électrique |
| **Equipements HVAC50A**, **50B de cabine** | Pleine puissance | Pleine puissance | Pleine puissance | Seulement dans la cabine en service | Seulement dans la cabine en service | Interruption de la fourniture électrique | Interruption de la fourniture électrique |
| **Equipements 54 400 V 50 Hz** | Pleine puissance | Pleine puissance | Pleine puissance | Pleine puissance | Pleine puissance | Pleine puissance | Interruption de la fourniture |
| **Equipements 56 courant continu 24 V** | Pleine puissance | Pleine puissance | Pleine puissance | Alimentation par la batterie auxiliaire 60 | Alimentation par la batterie auxiliaire 60 | Alimentation par la batterie auxiliaire 60 | Alimentation par la batterie auxiliaire 60 |

Dans le tableau 1, les lignes 2 à 5 (en partant du haut du tableau) fournissent l'état de fonctionnement souhaité respectivement pour les équipements HVAC 46A, 46B, 46C réservés aux passagers, pour les équipements HVAC 50A, 50B des cabines de pilotage 52A, 52B, pour l'équipement 54 alimenté en courant triphasé à fréquence fixe ou monophasé à fréquence fixe, et pour l'équipement 56 alimenté en courant continu.

Les colonnes 2 à 7 (en partant de la gauche du tableau) fournissent l'état de fonctionnement souhaité pour chaque équipement consommateur 20 précité, en fonction du paramètre d'énergie.

Dans cet exemple, six niveaux d'énergie, ou seuils, décroissants sont définis. Ils sont avantageusement communs à tous les équipements consommateurs 20, ce qui donne une forme matricielle au tableau 1.

Selon une variante, la fréquence et/ou la tension d'alimentation des équipements HVAC 46A, 46B, 46C réservés aux passagers sont déterminées en utilisant le paramètre d'énergie.

Selon une variante non représentée, pour chaque type d'équipement consommateur 20, on définit un ou plusieurs seuils propre(s) à cet équipement. Dit autrement, dans cette variante, tel équipement consommateur 20 peut avoir un niveau 2 qui diffère du niveau 2 de tel autre équipement consommateur.

Selon un mode de réalisation particulier, les niveaux d'énergie sont adaptés en fonction de la localisation du véhicule ferroviaire 1.

Par exemple, si le véhicule ferroviaire 1 est proche de la sortie théorique de la zone géographique dépourvue de réseau électrique d'alimentation, le système de gestion d'énergie 40 peut décider de ne pas appliquer immédiatement le mode de fonctionnement correspondant au paramètre d'énergie obtenu. Le mode de fonctionnement correspondant au paramètre d'énergie obtenu est par exemple appliqué si le paramètre d'énergie diminue, ou si le véhicule ferroviaire 1 tarde à sortir de ladite zone, ou encore si le véhicule ferroviaire sort de la zone non alimentée prévue.

Ainsi, dans l'exemple représenté, pour les équipements HVAC 46A, 46B, 46C, le nombre de compresseurs 72 que l'on souhaite en service est de six (i.e. tous les compresseurs 72) si le paramètre d'énergie est supérieur ou égal au niveau 1. Ce nombre est de cinq si le paramètre d'énergie est strictement inférieur au niveau 1 et supérieur ou égal au niveau 2. Ce nombre se réduit progressivement jusqu'à trois lorsque le paramètre d'énergie est strictement inférieur au niveau 3 et supérieur ou égal au niveau 4. Lorsque le paramètre d'énergie est strictement inférieur au niveau 4, le nombre de compresseurs 72 devant être en service tombe à zéro, c'est-à-dire que le fonctionnement souhaité se traduit par un arrêt de tous les compresseurs 72.

Dans l'exemple, pour les équipements HVAC 50A, 50B des cabines de pilotage 52A, 52B, la logique de délestage consiste à alimenter ces deux équipements HVAC tant que le paramètre d'énergie est supérieur ou égal au niveau 2, puis à n'alimenter que celui se situant dans la cabine de pilotage 52A en service si le paramètre d'énergie est strictement inférieur au niveau 2 et supérieur ou égal au niveau 4. Enfin, si le paramètre d'énergie est strictement inférieur au niveau 4, aucun des équipements HVAC 50A, 50B ne doit être alimenté en électricité.

Selon un mode de réalisation particulier, une logique analogue est appliquée pour l'état de fonctionnement souhaité des organes de chauffage 66, et leur délestage éventuel.

Pour les équipements 54, l'alimentation doit, par exemple, être interrompue si le paramètre d'énergie est strictement inférieur au niveau 5.

Pour les équipements 56, l'alimentation doit, par exemple, être interrompue si le paramètre d'énergie est strictement inférieur au niveau 2. La batterie auxiliaire 60 prend alors le relai pour alimenter les équipements 54.

Comme on peut le constater, même lorsque les niveaux seuils sont communs à tous les équipements consommateurs 20, la détermination du fonctionnement souhaité est réalisable de manière indépendante pour chaque type d'équipement consommateur. Il est par exemple possible d'inhiber le délestage de tel ou tel type d'équipement consommateur 20.

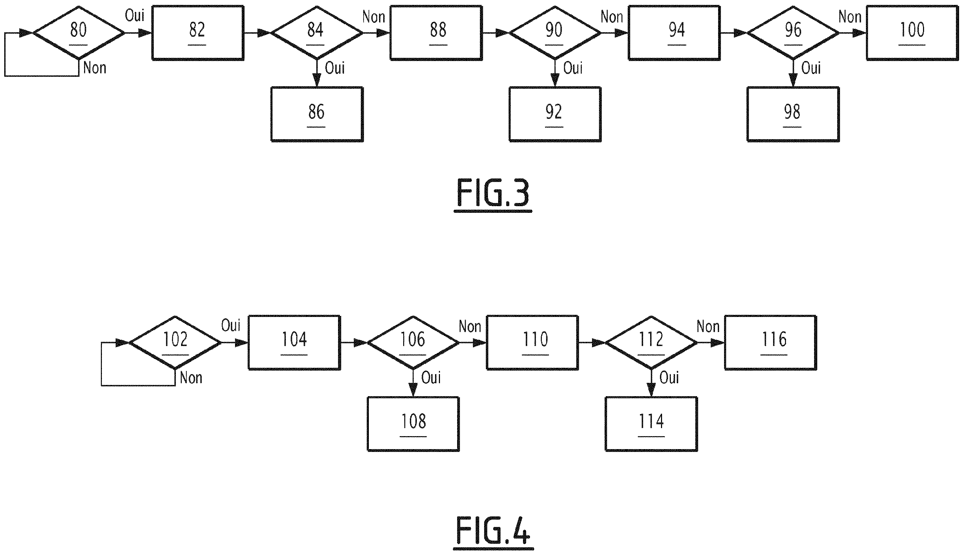

Pour les équipements HVAC 46A, 46B, 46C, une fois que le nombre de compresseurs 72 devant être en fonctionnement a été déterminé, l'unité de calcul 78 détermine avantageusement lesquels des équipements HVAC doivent être concernés par le délestage d'au moins un de leurs compresseurs 72 pour atteindre le nombre de compresseurs en fonctionnement voulu. Ceci va être décrit ci-après en référence à la figure 3.

Un test 80 est d'abord réalisé pour déterminer si le nombre de compresseurs 72 effectivement en fonctionnement dans les équipements HVAC 46A, 46B, 46C est strictement supérieur au nombre de compresseurs 72 devant être en fonctionnement tel que déterminé comme expliqué plus haut.

Si la réponse au test 80 est « non », le test est par exemple itéré (ou renouvelé au bout d'un laps de temps prédéterminé).

Si la réponse est « oui », une étape 82 est effectuée pour établir la liste des équipements HVAC ayant leurs deux compresseurs 72 en fonctionnement.

Un test 84 est réalisé pour déterminer si le nombre d'équipements HVAC dans cette liste est égal à 1.

Si oui, l'équipement HVAC concerné est sélectionné dans une étape 86, et la consigne de fonctionnement envoyée par le module d'envoi 80 comporte le fait d'arrêter l'un des compresseurs 72 de l'équipement HVAC sélectionné.

Si le résultat du test 84 est différent de 1, alors une étape 88 est effectuée pour calculer une durée résiduelle de cycle de chaque compresseur 72 en fonctionnement dans les équipements HVAC de la liste obtenu à l'étape 82.

La durée résiduelle de cycle de chaque compresseur 72 est représentative de la différence entre une durée minimale de fonctionnement sans interruption du compresseur (donnée par le constructeur), par exemple 3 minutes, et une durée effective de fonctionnement sans arrêt du compresseur.

L'étape 88 fournit, pour chaque équipement HVAC de la liste obtenu à l'étape 82, la somme des durées résiduelles de cycle.

L'étape 88 détermine enfin quels équipements HVAC de la liste ont une somme des durées résiduelles minimale.

Un test 90 est alors réalisé pour déterminer si le nombre d'équipements HVAC ayant une somme des durées résiduelles de cycle minimale est égal à 1.

Si oui, l'équipement HVAC concerné est sélectionné dans une étape 92, et la consigne de fonctionnement envoyée par le module d'envoi 80 comporte le fait d'arrêter l'un des compresseurs 72 de l'équipement HVAC sélectionné.

En variante, à l'étape 88, pour chaque équipement HVAC de la liste obtenu à l'étape 82, le minimum des durées résiduelles de cycle des compresseurs est utilisé au lieu de la somme des durées résiduelles de cycle.

Si le nombre d'équipements HVAC ayant une somme, ou un minimum, des durées résiduelles de cycle minimale n'est pas égal à 1, c'est-à-dire si l'on n'a pas pu sélectionner l'un des équipements HVAC 46A, 46B, 46C sur la base des durées résiduelles de cycle, une étape 94 est effectuée pour calculer le nombre de démarrages, dans une période écoulée, de chaque compresseur 72 en fonctionnement parmi les équipements HVAC de la liste obtenu à l'étape 82.

La période écoulée considérée est de par exemple une heure.

L'étape 94 fournit, pour chaque équipement HVAC de la liste obtenu à l'étape 82, la somme des nombres de démarrages.

L'étape 94 détermine enfin quels équipements HVAC de la liste ont une somme des nombres de démarrages minimale.

Un test 96 est alors réalisé pour déterminer si le nombre d'équipements HVAC ayant une somme des nombre de démarrages minimale est égal à 1.

Si oui, l'équipement HVAC concerné est sélectionné dans une étape 98, et la consigne de fonctionnement envoyée par le module d'envoi 80 comporte le fait d'arrêter l'un des compresseurs 72 de l'équipement HVAC sélectionné.

Selon une variante, à l'étape 94, pour chaque équipement HVAC de la liste obtenu à l'étape 82, le minimum des nombres de démarrage est utilisé au lieu de la somme des nombre de démarrages.

Si le nombre d'équipements HVAC ayant une somme, ou un minimum, des nombres de démarrages minimale n'est pas égal à 1, c'est-à-dire si l'on n'a pas pu sélectionner l'un des équipements HVAC 46A, 46B, 46C sur la base du nombre de démarrages des compresseurs 72, une étape 100 est avantageusement réalisée pour sélectionner les équipements à délester parmi les équipements HVAC 46A, 46B, 46C sur la base d'autres considérations. Par exemple, on choisit de délester l'équipement HVAC dont le dernier délestage est le plus ancien.

Pour chaque équipement à délester parmi les équipements HVAC 46A, 46B, 46C, on détermine avantageusement lequel des compresseur 72 de cet équipement il est préférable d'arrêter selon une logique qui va être expliquée ci-après en référence à la figure 4.

Un test 102 est d'abord réalisé pour déterminer si l'équipement HVAC considéré doit être délesté.

Si la réponse au test 102 est « non », le test 102 est par exemple itéré (ou renouvelé au bout d'un laps de temps prédéterminé). Si la réponse est « oui », une étape 104 est effectuée pour calculer la durée résiduelle de cycle (selon la définition donnée plus haut) de chaque compresseur 72 de l'équipement HVAC considéré. L'étape 104 détermine ensuite quels compresseurs 72 ont une durée résiduelle de cycle minimale.

Un test 106 est alors réalisé pour déterminer si le nombre de compresseurs 72 ayant une durée résiduelle de cycle minimale est égal à 1.

Si oui, le compresseur 72 concerné est sélectionné dans une étape 108, et la consigne de fonctionnement envoyée par le module d'envoi 80 comporte le fait d'arrêter ce compresseur 72 de l'équipement HVAC concerné.

Si le nombre de compresseurs 72 ayant des durées résiduelles de cycle minimale n'est pas égal à 1, c'est-à-dire si l'on n'a pas pu sélectionner l'un des compresseurs 72 sur la base des durées résiduelles de cycle, une étape 110 est effectuée pour calculer le nombre de démarrages, dans une période écoulée, de chaque compresseur 72 de l'équipement HVAC concerné. La période écoulée considérée est de par exemple une heure.

L'étape 110 détermine ensuite quels compresseurs 72 ont un nombre de démarrages minimal.

Un test 112 est réalisé pour déterminer si le nombre de compresseurs 72 ayant un nombre de démarrages minimal est égal à 1.

Si oui, le compresseur 72 concerné est sélectionné dans une étape 114, et la consigne de fonctionnement envoyée par le module d'envoi 80 comporte le fait d'arrêter ce compresseur 72 de l'équipement HVAC considéré.

Si le nombre de compresseurs 72 ayant un nombre de démarrages minimal n'est pas égal à 1, c'est-à-dire si l'on n'a pas pu sélectionner un des compresseurs 72 sur la base du nombre de démarrages, une étape 116 est avantageusement réalisée pour sélectionner l'un des compresseurs 72 sur la base d'un critère donné, par exemple, par le fournisseur des compresseurs 72.

Grâce aux caractéristiques décrites ci-dessus, la gestion de la fourniture d'énergie aux équipements consommateurs 20 est réalisée de façon extrêmement progressive, en minimisant le nombre d'équipements délestés. Ainsi, le risque d'incommoder les passagers ou le personnel du véhicule ferroviaire 1 est minimisé.

Par ailleurs, la prise en compte des durées résiduelles de cycle des compresseurs 72 et des nombres de démarrages permet de préserver la durée de vie des compresseurs et/ou de réduire le besoin de maintenance.

En variante, les modules de conversion 44A, 44B et 44C sont considérés comme des équipements consommateurs d'énergie et traités comme les équipements consommateurs 20.

L'invention présente aussi l'avantage d'autoriser une gestion individualisée par type d'équipements.

Comme on le comprendra aisément, l'invention présente un intérêt dans toutes les situations où l'on souhaite réduire la consommation énergétique du véhicule ferroviaire 1, donc pas seulement lors de la traversée d'une zone géographique dépourvue d'un réseau électrique d'alimentation. Par exemple, lorsque le réseau d'alimentation électrique est déficient, l'invention permet de demander à un ou plusieurs véhicules ferroviaires analogues au véhicule ferroviaire 1 de consommer moins d'énergie électrique. Ainsi, il est possible d'éviter de délester certaines portions du réseau.

## Revendications

1. Procédé de gestion de la fourniture d'énergie électrique à plusieurs équipements consommateurs (20) dans un véhicule ferroviaire (1) à partir d'un stockage d'énergie (10) embarqué, notamment lorsque le véhicule ferroviaire (1) traverse une zone géographique dépourvue d'un réseau électrique d'alimentation, le procédé comprenant les étapes suivantes :
- obtention d'au moins un paramètre d'énergie représentatif d'un niveau d'énergie disponible dans le stockage d'énergie (10), et optionnellement d'au moins un paramètre de localisation représentatif d'une localisation du véhicule ferroviaire (1),
- pour chacun des équipements consommateurs (20), détermination d'un état de fonctionnement souhaité, pris parmi une pluralité d'états de fonctionnements correspondant à des niveaux de consommation électrique différents, la détermination utilisant au moins le paramètre d'énergie et optionnellement le paramètre de localisation, au moins l'un des équipements consommateurs (20) étant un équipement HVAC (46A, 46B, 46C) réservé aux passagers du véhicule ferroviaire (1), l'équipement HVAC (46A, 46B, 46C) ayant plusieurs compresseurs (72) ou plusieurs organes de chauffage (66), la détermination de l'état de fonctionnement souhaité pour cet équipement consommateur comportant l'obtention d'un nombre de compresseurs (72) ou d'un nombre d'organes de chauffage (66) devant être en fonctionnement dans ledit équipement HVAC (46A, 46B, 46C) sur la base d'une comparaison du paramètre d'énergie avec plusieurs niveaux prédéterminés, ou obtenus à partir du paramètre de localisation, et
- envoi à chaque équipement consommateur (20) d'une consigne de fonctionnement selon l'état de fonctionnement souhaité,
dans lequel :
- la détermination de l'état de fonctionnement souhaité pour ledit équipement HVAC (46A, 46B, 46C) comporte une sélection des compresseurs (72) destinés à être arrêtés pour atteindre le nombre de compresseurs (72) devant être en fonctionnement, la sélection comprenant un calcul d'une durée résiduelle de cycle de chaque compresseur (72), la durée résiduelle de cycle étant représentative de la différence entre une durée minimale de fonctionnement sans interruption du compresseur (72) et une durée effective de fonctionnement sans arrêt du compresseur (72), et une première mise à l'écart des compresseurs (72) ayant les durées résiduelle de cycle les plus élevées, et/ou
- plusieurs des équipements consommateurs (20) sont des équipements HVAC (46A, 46B, 46C) réservés aux passagers, la détermination de l'état de fonctionnement souhaité comportant une sélection, parmi ces équipements consommateurs (20), de ceux comportant un ou plusieurs compresseurs (72) destiné(s) à être arrêté(s) pour atteindre le nombre de compresseurs (72) devant être en fonctionnement, ladite sélection des équipements HVAC (46A, 46B, 46C) comprenant :
- un calcul du nombre d'équipements HVAC (46A, 46B, 46C) ayant au moins deux compresseurs (72) en fonctionnement, et si ce nombre est égal à 1, la sélection de l'équipement HVAC (46A, 46B, 46C) concerné, et
- si ce nombre est différent de 1, pour chaque équipement HVAC (46A, 46B, 46C), un calcul d'une durée résiduelle de cycle de chaque compresseur (72) en fonctionnement, la durée résiduelle de cycle étant représentative de la différence entre une durée minimale de fonctionnement sans interruption du compresseur (72) et une durée effective de fonctionnement sans arrêt du compresseur (72), et un calcul de la somme ou du minimum des durées résiduelles de cycle, les équipements HVAC (46A, 46B, 46C) sélectionnés ayant la somme ou le minimum des durées résiduelles de cycle les plus bas.

2. Procédé selon la revendication 1, dans lequel la détermination de l'état de fonctionnement souhaité des équipements consommateurs (20) utilise au moins un paramètre représentatif d'un état de fonctionnement du véhicule ferroviaire (1), par exemple pris parmi tout ou partie des états suivants : « nominal », « dégradé », « secourant un autre véhicule ferroviaire », « à l'arrêt », « roulant », et « avec un ou plusieurs arrêts prévus pendant la traversée de la zone géographique dépourvue de réseau électrique ».

3. Procédé selon la revendication 1 ou 2, dans lequel la sélection des compresseurs (72) comprend un calcul d'un nombre de démarrages pendant une période écoulée de chaque compresseur (72) non mis à l'écart par la première mise à l'écart, et une deuxième mise à l'écart des compresseurs (72) possédant les nombres de démarrages les plus élevés.

4. Procédé selon l'une quelconque des revendications 1 à 3, dans lequel ladite sélection des équipements HVAC (46A, 46B, 46C) comprend, pour les équipements HVAC (46A, 46B, 46C) ayant la somme ou le minimum des durées résiduelles de cycle les plus bas, un calcul d'un nombre de démarrages de chaque compresseur (72) dans une période écoulée, et un calcul d'une somme ou d'un minimum des nombres de démarrages, les équipements HVAC (46A, 46B, 46C) sélectionnés ayant la somme ou le minimum des nombres de démarrages les plus bas.

5. Procédé selon l'une quelconque des revendications 1 à 4, dans lequel au moins deux des équipements consommateurs (20) sont des équipements HVAC (50A, 50B) desservant respectivement une cabine de pilotage (52A, 52B) du véhicule ferroviaire (1), l'une des cabine de pilotage (52A, 52B) étant en service et l'autre hors service, la détermination de l'état de fonctionnement souhaité pour ces équipements consommateurs comprenant une sélection de ceux destinés à être arrêtés, les équipements consommateurs destinés à être arrêtés étant :
- aucun si le paramètre d'énergie est supérieur à un premier seuil prédéterminé,
- l'un des deux équipements consommateurs si le paramètre d'énergie est inférieur au premier seuil et supérieur à un deuxième seuil prédéterminé, l'équipement consommateur à maintenir en fonctionnement se situant de préférence dans la cabine de pilotage en service (52A), et
- les deux équipements consommateurs si le paramètre d'énergie est inférieur au deuxième seuil.

6. Procédé selon l'une quelconque des revendications 1 à 5, dans lequel les équipements consommateurs (20) comprennent :
- un équipement consommateur (54) alimenté en courant triphasé, la détermination de l'état de fonctionnement souhaité pour cet équipement consommateur comportant une comparaison du paramètre d'énergie à un troisième seuil prédéterminé, l'état de fonctionnement souhaité étant une interruption de l'alimentation si le paramètre d'énergie est inférieur au troisième seuil, et/ou
- un équipement consommateur (46A, 46B, 46C) alimenté en courant triphasé à fréquence et/ou tension ajustable(s) via un convertisseur (30), l'état de fonctionnement souhaité pour cet équipement consommateur comportant une alimentation à une fréquence et/ou tension inférieure(s) à une fréquence nominale d'alimentation et/ou à une tension nominale d'alimentation, la fréquence et/ou la tension étant déterminées en utilisant au moins le paramètre d'énergie, et/ou
- un équipement consommateur (56) alimenté en courant continu à partir du stockage d'énergie via le convertisseur (30), de préférence à une tension de 24V, la détermination de l'état de fonctionnement souhaité pour cet équipement consommateur (56) comportant une comparaison du paramètre d'énergie à un quatrième seuil prédéterminé, l'état de fonctionnement souhaité étant une interruption de l'alimentation via le convertisseur (30) si le paramètre d'énergie est inférieur au quatrième seuil, l'équipement consommateur étant alors de préférence alimenté par une batterie auxiliaire (60).

7. Procédé selon l'une quelconque des revendications 1 à 6, dans lequel l'un des équipements consommateurs (20) est un système (58) de traction et de freinage du véhicule ferroviaire (1), la détermination de l'état de fonctionnement souhaité pour cet équipement consommateur comportant :
- un calcul d'une puissance ou d'un courant d'alimentation réduits à consommer par cet équipement consommateur, ou
- un calcul d'une consigne de vitesse maximale, la vitesse maximale étant destinée à ne pas être dépassée par le véhicule ferroviaire (1).

8. Système de gestion d'énergie (40) destiné à gérer la fourniture d'énergie électrique à plusieurs équipements consommateurs (20) dans un véhicule ferroviaire (1) à partir d'un stockage d'énergie (10) embarqué, notamment lorsque le véhicule ferroviaire (1) traverse une zone géographique dépourvue d'un réseau électrique d'alimentation, le système de gestion d'énergie (40) comprenant :
- des équipements consommateurs (20) dont au moins l'un est équipement HVAC (46A, 46B, 46C) réservé aux passagers du véhicule ferroviaire (1), l'équipement HVAC (46A, 46B, 46C) ayant plusieurs compresseurs (72) ou plusieurs organes de chauffage (66),
- un module d'énergie (74) adapté pour fournir au moins un paramètre d'énergie représentatif d'un niveau d'énergie disponible dans le stockage d'énergie (10), et optionnellement un module de localisation (76) adapté pour fournir au moins un paramètre de localisation représentatif d'une localisation du véhicule ferroviaire (1),
- un module de calcul (78) adapté pour déterminer un état de fonctionnement souhaité pour chacun des équipements consommateurs (20), pris parmi une pluralité d'états de fonctionnements correspondant à des niveaux de consommation électrique différents, la détermination utilisant au moins le paramètre d'énergie et optionnellement le paramètre de localisation, la détermination de l'état de fonctionnement souhaité pour ledit équipement HVAC (46A, 46B, 46C) comportant l'obtention d'un nombre de compresseurs (72) ou d'un nombre d'organes de chauffage (66) devant être en fonctionnement dans ledit équipement HVAC (46A, 46B, 46C) sur la base d'une comparaison du paramètre d'énergie avec plusieurs niveaux prédéterminés, ou obtenus à partir du paramètre de localisation, et
- un module d'envoi (80) pour envoyer à chaque équipement consommateur (20) une demande de fonctionnement selon l'état de fonctionnement souhaité,
dans lequel :
- le module de calcul (78) est en outre adapté pour que la détermination de l'état de fonctionnement souhaité pour ledit équipement HVAC (46A, 46B, 46C) comporte une sélection des compresseurs (72) destinés à être arrêtés pour atteindre le nombre de compresseurs (72) devant être en fonctionnement, la sélection comprenant un calcul d'une durée résiduelle de cycle de chaque compresseur (72), la durée résiduelle de cycle étant représentative de la différence entre une durée minimale de fonctionnement sans interruption du compresseur (72) et une durée effective de fonctionnement sans arrêt du compresseur (72), et une première mise à l'écart des compresseurs (72) ayant les durées résiduelle de cycle les plus élevées, et/ou
- plusieurs des équipements consommateurs (20) étant des équipements HVAC (46A, 46B, 46C) réservés aux passagers, le module de calcul (78) est en outre adapté pour que la détermination de l'état de fonctionnement souhaité comporte une sélection, parmi ces équipements consommateurs (20), de ceux comportant un ou plusieurs compresseurs (72) destiné(s) à être arrêté(s) pour atteindre le nombre de compresseurs (72) devant être en fonctionnement, ladite sélection des équipements HVAC (46A, 46B, 46C) comprenant :
- un calcul du nombre d'équipements HVAC (46A, 46B, 46C) ayant au moins deux compresseurs (72) en fonctionnement, et si ce nombre est égal à 1, la sélection de l'équipement HVAC (46A, 46B, 46C) concerné, et
- si ce nombre est différent de 1, pour chaque équipement HVAC (46A, 46B, 46C), un calcul d'une durée résiduelle de cycle de chaque compresseur (72) en fonctionnement, la durée résiduelle de cycle étant représentative de la différence entre une durée minimale de fonctionnement sans interruption du compresseur (72) et une durée effective de fonctionnement sans arrêt du compresseur (72), et un calcul de la somme ou du minimum des durées résiduelles de cycle, les équipements HVAC (46A, 46B, 46C) sélectionnés ayant la somme ou le minimum des durées résiduelles de cycle les plus bas.

9. Véhicule ferroviaire (1) adapté pour interagir avec, ou comprenant, un système de gestion d'énergie (40) selon la revendication 8.

## Patentansprüche

1. Verfahren zur Verwaltung der Lieferung von elektrischer Energie an mehrere Verbrauchervorrichtungen (20) in einem Schienenfahrzeug (1) aus einem bordeigenen Energiespeicher (10), insbesondere wenn das Schienenfahrzeug (1) eine geographische Zone ohne ein elektrisches Versorgungsnetz durchquert, wobei das Verfahren die folgenden Schritte aufweist:
- Erlangung von mindestens einen Energieparameter, welcher für ein verfügbares Energieniveau in dem Energiespeicher (10) repräsentativ ist, und optional von mindestens einen Lokalisierungsparameter, welcher für einen Standort des Schienenfahrzeugs (1) repräsentativ ist,
- für jede Verbrauchervorrichtung (20), Ermittlung eines gewünschten Betriebszustands, ausgewählt aus einer Mehrzahl von Betriebszuständen, welche mit unterschiedlichen Niveaus des elektrischen Verbrauchs korrespondieren, wobei die Ermittlung mindestens den Energieparameter und optional den Lokalisierungsparameter verwendet, wobei mindestens eine von den Verbrauchervorrichtungen (20) eine den Passagieren des Schienenfahrzeugs (1) vorbehaltene HVAC-Vorrichtung (46A, 46B, 46C) ist, wobei die HVAC-Vorrichtung (46A, 46B, 46C) mehrere Verdichter (71) oder mehrere Heizeinrichtungen (66) aufweist, wobei die Ermittlung des gewünschten Betriebszustands für diese Verbrauchervorrichtung aufweist das Erlangen einer Anzahl von Verdichtern (72) oder einer Anzahl von Heizeinrichtungen (66), in der HVAC-Vorrichtung (46A, 46B, 46C) auf Grundlage eines Vergleichs des Energieparameters mit mehreren vorbestimmten Niveaus in Betrieb sein sollen oder ausgehend vom Lokalisierungsparameter erlangt werden, und
- Senden, an jede Verbrauchervorrichtung (20), einer Betriebsvorgabe gemäß dem gewünschten Betriebszustand,
wobei:
- die Ermittlung des gewünschten Betriebszustands für die HVAC-Vorrichtung (46A, 46B, 46C) eine Auswahl von Verdichtern (72), welche dazu bestimmt sind, gestoppt zu werden, um die Anzahl von Verdichtern (72), welche in Betrieb sein sollen, zu erreichen, aufweist, wobei die Auswahl aufweist ein Berechnen einer Restzykluslaufzeit eines jeden Verdichters (72), wobei die Restzykluslaufzeit repräsentativ für den Unterschied zwischen einer minimalen unterbrechungslosen Betriebsdauer des Verdichters (72) und einer tatsächlichen Betriebsdauer ohne Stopp des Verdichters (72) ist, und ein erstes Ausklammern von Verdichtern (72), die die höchsten Restzykluslaufzeiten aufweisen, und/oder
- mehrere von den Verbrauchervorrichtungen (20) den Passagieren vorbehaltene HVAC-Vorrichtungen (46A, 46B, 46C) sind, die Ermittlung des gewünschten Betriebszustands für die HVAC-Vorrichtung (46A, 46B, 46C) aufweist eine Auswahl, aus den Verbrauchervorrichtungen (20), von denjenigen, welche einen oder mehrere Verdichter (72), der (die) dazu bestimmt ist (sind), gestoppt zu werden, aufweisen, um die Anzahl von Verdichtern (72), welche in Betrieb sein sollen, zu erreichen, wobei die Auswahl von HVAC-Vorrichtungen (46A, 46B, 46C) aufweist:
- eine Berechnung einer Anzahl von HVAC-Vorrichtungen (46A, 46B, 46C) mit mindestens zwei in Betrieb befindlichen Verdichtern (72), und, falls diese Anzahl gleich 1 ist, die Auswahl der betreffenden HVAC-Vorrichtung (46A, 46B, 46C), und
- falls diese Anzahl ungleich 1 ist, dann, für jede HVAC-Vorrichtung (46A, 46B, 46C), eine Berechnung einer Restzykluslaufzeit jedes in Betrieb befindlichen Verdichters (72), wobei die Restzykluslaufzeit repräsentativ für den Unterschied zwischen einer minimalen unterbrechungslosen Betriebsdauer des Verdichters (72) und einer tatsächlichen Betriebsdauer ohne Stopp des Verdichters (72) ist, und eine Berechnung der Summe oder des Minimums der Restzykluslaufzeiten, wobei die ausgewählten HVAC-Vorrichtungen (46A, 46B, 46C) die Summe oder das Minimum der Restzykluslaufzeiten, welche am niedrigsten sind, aufweist.

2. Verfahren gemäß dem Anspruch 1, wobei die Ermittlung des gewünschten Betriebszustands der Verbrauchervorrichtungen (20) mindestens einen Parameter verwendet, welcher repräsentativ ist für einen Betriebszustand des Schienenfahrzeugs (1), beispielsweise ausgewählt aus der Gesamtheit oder aus Teilen der folgenden Zustände: "Nenn", "Verschlechtert", "Unterstützen eines anderen Schienenfahrzeugs", "Im Stillstand", "Rollend" und "mit einem oder mehreren vorgesehenen Halten während der Durchquerung der geographischen Zone ohne elektrisches Netz".

3. Verfahren gemäß dem Anspruch 1 oder 2, wobei die Auswahl des Verdichters (72) eine Berechnung einer Anzahl von Starts während eines vergangenen Zeitraums von jedem Verdichter (72), welcher nicht durch das erste Ausklammern ausgeklammert wurde, und ein zweites Ausklammern von Verdichtern (72), welche die höchsten Anzahlen von Starts aufweisen, aufweist.

4. Verfahren gemäß irgendeinem der Ansprüche 1 bis 3, wobei die Auswahl der HVAC-Vorrichtungen (46A, 46B, 46C) aufweist, für die HVAC-Vorrichtungen (46A, 46B, 46C), welche die Summe oder das Minimum der Restzykluslaufzeiten, welche am niedrigsten sind, aufweisen, eine Berechnung einer Anzahl von Starts jedes Verdichters (72) in einem vergangenen Zeitraum und eine Berechnung einer Summe oder eines Minimums der Anzahlen von Starts, wobei die ausgewählten HVAC-Vorrichtungen (46A, 46B, 46C) die Summe oder das Minimum der Anzahlen von Starts, welche am niedrigsten sind, aufweisen.

5. Verfahren gemäß irgendeinem der Ansprüche 1 bis 4, wobei mindestens zwei der Verbrauchervorrichtungen (20) HVAC-Vorrichtungen (50A, 50B) sind, welche jeweilig eine Führerkabine (52A, 52B) des Schienenfahrzeugs (1) beliefern, wobei eine der Führerkabinen (52A, 52B) im Einsatz ist und die andere nicht im Einsatz ist, wobei die Ermittlung des gewünschten Betriebszustands für diese Verbrauchervorrichtungen eine Auswahl von denjenigen, welche dazu bestimmt sind, gestoppt zu werden, aufweist, wobei die Verbrauchervorrichtungen, welche dazu bestimmt sind, gestoppt zu werden, sind:
- keine, falls der Energieparameter größer als ein erster vorbestimmter Schwellenwert ist,
- eine der zwei Verbrauchervorrichtungen, falls der Energieparameter kleiner als der erste vorbestimmte Schwellenwert ist und größer als ein zweiter vorbestimmter Schwellenwert ist, wobei die in Betrieb zu haltende Verbrauchervorrichtung sich vorzugsweise in der im Einsatz befindlichen Führerkabine (52A) befindet, und
- die zwei Verbrauchervorrichtungen, falls der Energieparameter kleiner als der zweite vorbestimmte Schwellenwert ist.

6. Verfahren gemäß irgendeinem der Ansprüche 1 bis 5, wobei die Verbrauchervorrichtungen (20) aufweisen:
- eine Verbrauchervorrichtung (54), welche mit dreiphasigen Strom versorgt wird, wobei die Ermittlung des gewünschten Betriebszustands für diese Verbrauchervorrichtung einen Vergleich des Energieparameters mit einem dritten vorbestimmten Schwellenwert aufweist, wobei der gewünschte Betriebszustand eine Unterbrechung der Versorgung ist, falls der Energieparameter kleiner als der dritte Schwellenwert ist, und/oder
- eine Verbrauchervorrichtung (46A, 46B, 46C), welche mit dreiphasigen Strom mit durch einen Wandler (30) einstellbarer Frequenz und/oder Spannung versorgt wird, wobei der gewünschte Betriebszustand für diese Verbrauchervorrichtung eine Versorgung mit einer Frequenz und/oder Spannung, welche kleiner als eine Nenn-Versorgungsfrequenz und/oder eine Nenn-Versorgungsspannung ist (sind), aufweist, wobei die Frequenz und/oder Spannung unter Verwendung von mindestens dem Energieparameter ermittelt wird/werden, und/oder
- eine Verbrauchervorrichtung (56), welche mit Gleichstrom aus dem Energiespeicher über den Wandler (30), bevorzugt mit einer Spannung von 24V, versorgt wird, wobei die Ermittlung des gewünschten Betriebszustands für diese Verbrauchervorrichtung (56) einen Vergleich des Energieparameters mit einem vierten vorbestimmten Schwellenwert aufweist, wobei der gewünschte Betriebszustand eine Unterbrechung der Versorgung mittels des Wandlers (30) ist, falls der Energieparameter kleiner als der vierte Schwellenwert ist, wobei die Verbrauchervorrichtung dann bevorzugt mittels einer Hilfsbatterie (60) versorgt wird.

7. Verfahren gemäß irgendeinem der Ansprüche 1 bis 6, wobei eine der Verbrauchervorrichtungen (20) ein System (58) zum Antreiben und zum Bremsen des Schienenfahrzeugs (1) ist, wobei die Ermittlung des gewünschten Betriebszustands für diese Verbrauchervorrichtung aufweist:
- eine Berechnung einer reduzierten Spannung oder eines reduzierten Stroms zur Versorgung, welche/welcher durch diese Verbrauchervorrichtung zu verbrauchen ist, oder
- eine Berechnung einer Maximalgeschwindigkeitsvorgabe, wobei die Maximalgeschwindigkeit dazu bestimmt ist, nicht durch das Schienenfahrzeug (1) überschritten zu werden.

8. Energieverwaltungssystem (40), welches dazu bestimmt ist, die Lieferung von elektrischer Energie an mehrere Verbrauchervorrichtungen (20) in einem Schienenfahrzeug (1) aus einem bordeigenen Energiespeicher (10) zu verwalten, insbesondere wenn das Schienenfahrzeug (1) eine geographische Zone ohne ein elektrisches Versorgungsnetz durchquert, wobei das Energieverwaltungssystem (40) aufweist:
- Verbrauchervorrichtungen (20), von denen mindestens eine eine den Passagieren des Schienenfahrzeugs (1) vorbehaltene HVAC-Vorrichtung (46A, 46B, 46C) ist, wobei die HVAC-Vorrichtung (46A, 46B, 46C) mehrere Verdichter (71) oder mehrere Heizeinrichtungen (66) aufweist,
- ein Energiemodul (74), welches dazu eingerichtet ist, mindestens einen Energieparameter, welcher für ein verfügbares Energieniveau in dem Energiespeicher (10) repräsentativ ist, bereitzustellen, und optional ein Lokalisierungsmodul (76), welches dazu eingerichtet ist, mindestens einen Lokalisierungsparameter, welcher für einen Standort des Schienenfahrzeugs (1) repräsentativ ist, bereitzustellen,
- ein Berechnungsmodul (78), welches dazu eingerichtet ist, einen gewünschten Betriebszustand für jede Verbrauchervorrichtung (20), ausgewählt aus einer Mehrzahl von Betriebszuständen, welche mit unterschiedlichen Niveaus des elektrischen Verbrauchs korrespondieren, zu ermitteln, wobei die Ermittlung des gewünschten Betriebszustands für die HVAC-Vorrichtung (46A, 46B, 46C) aufweist das Erlangen einer Anzahl von Verdichtern (72) oder einer Anzahl von Heizeinrichtungen (66), welche in der HVAC-Vorrichtung (46A, 46B, 46C) auf Grundlage eines Vergleichs des Energieparameters mit mehreren vorbestimmten Niveaus in Betrieb sein sollen oder ausgehend vom Lokalisierungsparameter erlangt werden, und
- ein Sendemodul (80) zum Senden einer Betriebsanforderung gemäß dem gewünschten Betriebszustand an jede Verbrauchervorrichtung (20),
wobei:
das Berechnungsmodul (78) ferner derart eingerichtet ist, dass die Ermittlung des gewünschten Betriebszustands für die HVAC-Vorrichtung (46A, 46B, 46C) eine Auswahl von Verdichtern (72), welche dazu bestimmt sind, gestoppt zu werden, um die Anzahl von Verdichtern (72), welche in Betrieb sein sollen, zu erreichen, aufweist, wobei die Auswahl aufweist ein Berechnen einer Restzykluslaufzeit eines jeden Verdichters (72), wobei die Restzykluslaufzeit repräsentativ für den Unterschied zwischen einer minimalen unterbrechungslosen Betriebsdauer des Verdichters (72) und einer tatsächlichen Betriebsdauer ohne Stopp des Verdichters (72) ist, und ein erstes Ausklammern von Verdichtern (72), die die höchsten Restzykluslaufzeiten aufweisen, und/oder
- mehrere von den Verbrauchervorrichtungen (20) den Passagieren vorbehaltene HVAC-Vorrichtungen (46A, 46B, 46C) sind, wobei das Berechnungsmodul (78) ferner derart eingerichtet ist, dass die Ermittlung des gewünschten Betriebszustands für die HVAC-Vorrichtung (46A, 46B, 46C) aufweist eine Auswahl, aus den Verbrauchervorrichtungen (20), von denjenigen, welche einen oder mehrere Verdichter (72), der (die) dazu bestimmt ist (sind), gestoppt zu werden, aufweisen, um die Anzahl von Verdichtern (72), welche in Betrieb sein sollen, zu erreichen, wobei die Auswahl von HVAC-Vorrichtungen (46A, 46B, 46C) aufweist:
- eine Berechnung einer Anzahl von HVAC-Vorrichtungen (46A, 46B, 46C) mit mindestens zwei in Betrieb befindlichen Verdichtern (72), und, falls diese Anzahl gleich 1 ist, die Auswahl der betreffenden HVAC-Vorrichtung (46A, 46B, 46C), und
- falls diese Anzahl ungleich 1 ist, dann, für jede HVAC-Vorrichtung (46A, 46B, 46C), eine Berechnung einer Restzykluslaufzeit jedes in Betrieb befindlichen Verdichters (72), wobei die Restzykluslaufzeit repräsentativ für den Unterschied zwischen einer minimalen unterbrechungslosen Betriebsdauer des Verdichters (72) und einer tatsächlichen Betriebsdauer ohne Stopp des Verdichters (72) ist, und eine Berechnung der Summe oder des Minimums der Restzykluslaufzeiten, wobei die ausgewählten HVAC-Vorrichtungen (46A, 46B, 46C) die Summe oder das Minimum der Restzykluslaufzeiten, welche am niedrigsten sind, aufweist.

9. Schienenfahrzeug (1), welches eingerichtet ist zur Interaktion mit einem oder aufweist ein Energieverwaltungssystem (40) gemäß dem Anspruch 8.

## Claims

1. A method for managing the supply of electrical energy to several pieces of consuming equipment (20) in a railway vehicle (1) from an on board energy storage (10), in particular when the railway vehicle (1) is crossing a geographical zone without a power grid, the method comprising the following steps:
- obtaining at least one energy parameter representative of an energy level available in the energy storage (10), and optionally at least one localization parameter representative of a location of the railway vehicle (1),
- for each piece of consuming equipment (20), determining a desired operating state, taken from among a plurality of operating states corresponding to different electricity consumption levels, the determination using at least the energy parameter and optionally the localization parameter, at least one of the pieces of consuming equipment (20) is a piece of HVAC equipment (46A, 46B, 46C) reserved for passengers of the railway vehicle (1), the piece of HVAC equipment (46A, 46B, 46C) having several compressors (72) or several heating members (66), the determination of the desired operating state for this consuming equipment including obtaining a number of compressors (72) or a number of heating members (66) having to be running in said piece of HVAC equipment (46A, 46B, 46C) based on a comparison of the energy parameter with several predetermined levels, or obtained from the localization parameter, and
- sending each piece of consuming equipment (20) an operating setpoint depending on the desired operating state,
wherein:
- the determination of the desired operating state includes a selection of compressors (72) intended to be stopped to reach the number of compressors (72) having to be running, the selection comprising calculating a residual cycle duration of each compressor (72), the residual cycle duration being representative of the difference between a minimum uninterrupted operating duration of the compressor (72) and an actual operating duration of the compressor (72) without stopping, and a first dismissal of compressors (72) having the highest residual cycle durations, and/or
- several pieces of consuming equipment (20) are pieces of HVAC equipment (46A, 46B, 46C) reserved for passengers, the determination of the desired operating state including a selection, from among these pieces of consuming equipment (20), of those including one or several compressors (72) intended to be stopped to reach the number of compressors (72) needing to be operating, said selection of pieces of HVAC equipment (46A, 46B, 46C) comprising:
- calculating the number of pieces of HVAC equipment (46A, 46B, 46C) having at least two operating compressors (72), and if this number is equal to 1, selecting the piece of HVAC equipment (46A, 46B, 46C) in question, and
- if this number is different from 1, for each piece of HVAC equipment (46A, 46B, 46C), calculating a residual cycle duration of each operating compressor (72), the residual cycle duration being representative of the difference between a minimum uninterrupted operating duration of the compressor (72) and an actual operating duration of the compressor (72) without stopping, and calculating the sum or the minimum of the residual cycle durations, the selected pieces of HVAC equipment (46A, 46B, 46C) having the lowest sum or minimum of the residual cycle durations.

2. The method according to claim 1, wherein the determination of the desired operating state of the consuming equipment (20) uses at least one parameter representative of an operating state of the railway vehicle (1), for example taken from among all or some of the following states: "nominal", "downgraded", "rescuing another railway vehicle", "stopped", "moving", and "with one or several stops anticipated while crossing the geographical zone without a power grid".

3. The method according to claim 1 or 2, wherein the selection of the compressors (72) comprises a calculation of a number of startups during an elapsed period of each compressor (72) not dismissed by the first dismissal, and a second dismissal of compressors (72) having the highest number of startups.

4. The method according to any one of claims 1 to 3, wherein said selection of pieces of HVAC equipment (46A, 46B, 46C) comprises, for the pieces of HVAC equipment (46A, 46B, 46C) having the lowest sum or minimum of the residual cycle durations, calculating a number of startups of each compressor (72) in an elapsed period, and calculating a sum or a minimum of the numbers of startups, the selected pieces of HVAC equipment (46A, 46B, 46C) having the lowest sum or minimum of the number of startups.

5. The method according to any one of claims 1 to 4, wherein at least two of the pieces of consuming equipment (20) are pieces of HVAC equipment (50A, 50B) respectively serving a control cabin (52A, 52B) of the railway vehicle (1), one of the control cabins (52A, 52B) being in use and the other out of use, the determination of the desired operating state for these pieces of consuming equipment comprising selecting those intended to be stopped, the consuming equipment intended to be stopped being:
- none if the energy parameter is above a first predetermined threshold,
- one of the two pieces of consuming equipment if the energy parameter is below the first threshold and above a second predetermined threshold, the consuming equipment to be kept operating preferably being located in the control cabin that is in use (52A); and
- both pieces of consuming equipment if the energy parameter is below the second threshold.

6. The method according to any one of claims 1 to 5, wherein the pieces of consuming equipment (20) comprise:
- a piece of consuming equipment (54) supplied with three-phase current, the determination of the desired operating state for this piece of consuming equipment including a comparison of the energy parameter to a third predetermined threshold, the desired operating state being an interruption of the power supply if the energy parameter is below the third threshold; and/or
- a piece of consuming equipment (46A, 46B, 46C) supplied with three-phase current at an adjustable frequency and/or voltage via a converter (30), the desired operating state for this piece of consuming equipment including a power supply at a frequency and/or voltage below a nominal supply frequency and/or a nominal supply voltage, the frequency and/or the voltage being determined by using at least the energy parameter, and/or
- a piece of consuming equipment (56) supplied with direct current from the energy storage via the converter (30), preferably at a voltage of 24V, the determination of the desired operating state for this piece of consuming equipment (56) including a comparison of the energy parameter to a fourth predetermined threshold, the desired operating state being an interruption of the power supply via the converter (30) if the energy parameter is below the fourth threshold, the piece of consuming equipment then preferably being powered by an auxiliary battery (60).

7. The method according to any one of claims 1 to 6, wherein one of the pieces of consuming equipment (20) is a traction and braking system (58) of the railway vehicle (1), the determination of the desired operating state for this piece of consuming equipment including:
- calculating a reduced power or a reduced supply current to be consumed by this piece of consuming equipment, or
- calculating a maximum speed setpoint, the maximum speed being intended not to be exceeded by the railway vehicle (1).

8. A system for managing electrical energy (40) intended to manage the supply of electrical energy to several pieces of consuming equipment (20) in a railway vehicle (1) from an on board energy storage (10), in particular when the railway vehicle (1) is crossing a geographical zone without a power grid, the energy management system (40) comprising:
- pieces of consuming equipment (20) of which at least one is a piece of HVAC equipment (46A, 46B, 46C) reserved for passengers of the railway vehicle (1), the piece of HVAC equipment (46A, 46B, 46C) having several compressors (72) or several heating members (66),
- an energy module (74) suitable for providing at least one energy parameter representative of an energy level available in the energy storage (10), and optionally a localization module (76) suitable for providing at least one localization parameter representative of a location of the railway vehicle (1),
- a calculating module (78) suitable for determining a desired operating state for each piece of consuming equipment (20), chosen from among a plurality of operating states corresponding to different electricity consumption levels, the determination using at least the energy parameter and optionally the localization parameter, the determination of the desired operating state for this consuming equipment including obtaining a number of compressors (72) or a number of heating members (66) having to be running in said piece of HVAC equipment (46A, 46B, 46C) based on a comparison of the energy parameter with several predetermined levels, or obtained from the localization parameter, and
- a sending module (80) for sending each piece of consuming equipment (20) an operating set point depending on the desired operating state,
wherein:
- the calculating module (78) is further adapted so that the determination of the desired operating state includes a selection of compressors (72) intended to be stopped to reach the number of compressors (72) having to be running, the selection comprising calculating a residual cycle duration of each compressor (72), the residual cycle duration being representative of the difference between a minimum uninterrupted operating duration of the compressor (72) and an actual operating duration of the compressor (72) without stopping, and a first dismissal of compressors (72) having the highest residual cycle durations, and/or
- several pieces of consuming equipment (20) are pieces of HVAC equipment (46A, 46B, 46C) reserved for passengers, the determination of the desired operating state including a selection, from among these pieces of consuming equipment (20), of those including one or several compressors (72) intended to be stopped to reach the number of compressors (72) needing to be operating, said selection of pieces of HVAC equipment (46A, 46B, 46C) comprising:
- calculating the number of pieces of HVAC equipment (46A, 46B, 46C) having at least two operating compressors (72), and if this number is equal to 1, selecting the piece of HVAC equipment (46A, 46B, 46C) in question, and
- if this number is different from 1, for each piece of HVAC equipment (46A, 46B, 46C), calculating a residual cycle duration of each operating compressor (72), the residual cycle duration being representative of the difference between a minimum uninterrupted operating duration of the compressor (72) and an actual operating duration of the compressor (72) without stopping, and calculating the sum or the minimum of the residual cycle durations, the selected pieces of HVAC equipment (46A, 46B, 46C) having the lowest sum or minimum of the residual cycle durations.

9. A railway vehicle (1) suitable for interacting with, or comprising, an energy management system (40) according to claim 8.
